# EUROPEAN PATENT APPLICATION

(11) **EP 4 667 831 A1**
(43) Date of publication of application: **24.12.2025**
(21) Application number: 25180439.9
(22) Date of filing: 03.06.2025
(51) Int. Cl.: F24C 15/20

(54) **RANGE HOOD**

(30) Priority: 17.06.2024 TW 113122384
(71) Applicant: Microjet Technology Co., Ltd., Hsinchu (TW)
(72) Inventor: Mou, Hao-Jan, Hsinchu (TW); Wu, Chin-Chuan, Hsinchu (TW); Chen, Hung-Yu, Hsinchu (TW); Chen, Chia-Yun, Hsinchu (TW); Huang, Chi-Feng, Hsinchu (TW)
(74) Representative: Uexküll & Stolberg

(57) **Abstract**

A range hood is disclosed and includes a guiding cover (11), a guiding duct (12), an air guiding fan (13), an electrostatic oil fume separator (14)and a networked controller. The guiding cover (11) is arranged in a kitchen space (A), two deflectors (11a) are extended from two sides of the guiding cover (11) for blocking air pollution from spreading and concentrating to an air guiding path. The guiding duct (12) communicates to the air guiding path. The air guiding fan (13) communicates to the guiding duct (12). The electrostatic oil fume separator (14) is arranged above the guiding cover (11) to separate oil droplets and smoke gas. The networked controller receives a control command of an indoor air pollution prevention system (C) through a networked communication, so as to control an activation operation of the air guiding fan (13), thereby the air pollution of the kitchen space (A) can be detected in real time and purified to a level close to zero.

## Description

### FIELD OF THE INVENTION

The present disclosure relates to a range hood, and more particularly to a range hood connecting an indoor air pollution prevention system for purifying the air pollution to a level close to zero.

### BACKGROUND OF THE INVENTION

In recent years, people pay more and more attention to the air quality around our daily lives. Particulate matter (PM), such as PM1 PM2.5, PM10, gases, such as carbon dioxide, total volatile organic compounds (TVOC), formaldehyde etc., and even suspended particles, aerosols, bacteria and viruses contained in the air are all exposed in the environment and might affect the human health, and even endanger people's lives seriously.

Currently, it is not easy to control the indoor air quality. Besides the outdoor air quality, the indoor air-conditioning conditions and the pollution sources are the major factors affecting the indoor air quality. More particularly to the dust, bacteria and viruses caused by the poor indoor air circulation.

In order to implement the indoor air pollution prevention system to detect the air pollution of the kitchen space and purify to a level close to zero, it is a need to provide a range hood to solve the problem of purifying and removing the oil smoke in the kitchen space. Conventional range hoods usually lack air quality monitoring and automatic purification functions, and can only be manually operated to remove oil smoke and air pollution in the kitchen space, and cannot monitor the air pollution level in real time anytime and anywhere. Moreover, conventional range hoods are usually arranged at a certain height above the cooking equipments. When it operates, the oil smoke should be sucked upwards to remove, but in fact, the oil smoke generated around the cooking equipments will spread outwards. This results in the problems that the oil smoke cannot be removed effectively, and the kitchen space is still filled with oil smoke and air pollution, affecting the health of the cooks who inhale the air pollution. In addition, the fan of the conventional range hood is also integrated into one device, when the fan is actuated to remove the oil smoke, a lot of noise will be generated. Accordingly, there is a need of providing a range hood, which connects the indoor air pollution prevention system to detect the air pollution of the kitchen space and purify to a level close to zero. Consequently, it is implemented to monitor the air quality in the kitchen space anytime and anywhere, so as to improve the indoor air quality, reduce the harmful gases, and quickly purify the indoor air.

### SUMMARY OF THE INVENTION

The major object of the present disclosure is to provide a range hood, which connects the indoor air pollution prevention system to detect the air pollution of the kitchen space and purify to a level close to zero. By the arrangement of the networked controller connecting the indoor air pollution prevention system, it is implemented to monitor the air quality in the kitchen space anytime and anywhere. In the mean time, the range hood controls the activation of air guiding fan in real time, so as to guide the passing air pollution to be separated into oil droplets and smoke gas by the electrostatic oil fume separator, wherein the separated smoke gas is discharged to the outdoor field through the guiding duct. Moreover, the range hood also detects the air pollution level in the kitchen space and intelligently compares it with the air quality of the surrounding environment, and instantly control the air guide fan to adjust the exhaust volume according to the air pollution level. In addition, a guiding cover is arranged in one side of a cooking equipment of the kitchen space. The guide cover is not only small in size and does not occupy the kitchen space, but also shortens the distance for absorbing oil droplets and smoke gas. There are two deflectors arranged in the two side of the guide cover, the air pollution surrounding the cooking equipment can be blocked without spreading, and concentrated to the air guiding path, so as to purify the air pollution to a level close to zero. Furthermore, the air guiding fan is arranged on the guiding duct, and forms an isolation space from the guiding cover, so that a noise generated from the activation operation of the air guiding fan is far away from the kitchen space. Consequently, the noise is effectively reduced to achieve a quiet effect, allowing the cooks to stay comfortable in the kitchen space. Consequently, by the configuration of the air guiding fan isolated from the cooking equipment of the kitchen space, the effect of keeping away from oil pollution is achieved, thereby reducing the frequency and difficulty of cleaning.

In accordance with an aspect of the present disclosure, a range hood is provided and includes a guiding cover, a guiding duct, an air guiding fan, an electrostatic oil fume separator and a networked controller. The guiding cover is arranged in one side of a cooking equipment of a kitchen space. Two deflectors are extended from two sides of the guiding cover for blocking air pollution surrounding the cooking equipment from spreading. The air pollution is concentrated to an air guiding path, so as to purify the air pollution to a level close to zero. The guiding duct is in communication with the air guiding path. One end is configured to be in communication with a top of the guiding cover. The other end is configured to be in communication with to an outdoor field. The air guiding fan is arranged to be in communication with the guiding duct for guiding air pollution to discharge to the outdoor field. The electrostatic oil fume separator is arranged above the guiding cover. One end of the electrostatic oil fume separator is in communication with the guiding duct to separate oil smoke. The passing air pollution is separated into oil droplets to be collected. A separated smoke gas is guided to the guiding duct, and discharged to the outdoor field by the air guiding fan. The networked controller receives a control command of an indoor air pollution prevention system through a networked communication, so as to control an activation operation of the air guiding fan. Consequently, the air pollution of the kitchen space can be detected in real time and purified to a level close to zero by the range hood.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic perspective view illustrating a range hood arranged in a kitchen space according to an embodiment of the present disclosure;
FIG. 1B is a schematic perspective view illustrating a range hood arranged in a kitchen space according to another embodiment of the present disclosure;
FIG. 2 is a schematic perspective view illustrating a gas detection module according to the embodiment of the present disclosure;
FIG. 3A is a first schematic view illustrating an assembled gas detection main body of the gas detection module according to an embodiment of the present disclosure;
FIG. 3B is a second schematic view illustrating the assembled gas detection main body of the gas detection module according to the embodiment of the present disclosure;
FIG. 4 is a schematic exploded view illustrating the gas detection main body of the gas detection module according to the embodiment of the present disclosure;
FIG. 5A is a first schematic view illustrating a base of the gas detection main body according to an embodiment of the present disclosure;
FIG. 5B is a second schematic view illustrating the base of the gas detection main body according to the embodiment of the present disclosure;
FIG. 6 is a third schematic view illustrating the base of the gas detection main body according to the embodiment of the present disclosure;
FIG. 7A is a schematic exploded view illustrating a piezoelectric actuator and the base of the gas detection main body according to an embodiment of the present disclosure;
FIG. 7B is a schematic view illustrating the combination of the piezoelectric actuator and the base of the gas detection main body according to the embodiment of the present disclosure;
FIG. 8A is a first schematic exploded view illustrating the piezoelectric actuator according to an embodiment of the present disclosure;
FIG. 8B is a second schematic exploded view illustrating the piezoelectric actuator according to the embodiment of the present disclosure;
FIG. 9A is a first schematic cross-sectional view illustrating the operation step of the piezoelectric actuator according to an embodiment of the present disclosure;
FIG. 9B is a second schematic cross-sectional view illustrating the operation step of the piezoelectric actuator according to the embodiment of the present disclosure;
FIG. 9C is a third schematic cross-sectional view illustrating the operation step of the piezoelectric actuator according to the embodiment of the present disclosure;
FIG. 10A is a first schematic cross-sectional view illustrating the assembled gas detection main body according to an embodiment of the present disclosure;
FIG. 10B is a second schematic cross-sectional view illustrating the assembled gas detection main body according to the embodiment of the present disclosure;
FIG. 10C is a third schematic cross-sectional view illustrating the assembled gas detection main body according to the embodiment of the present disclosure;
FIG. 11 is a block diagram illustrating the gas detection module and a communication thereof according to an embodiment of the present disclosure; and
FIG. 12 is a schematic exploded view illustrating a filter element disposed in a guiding duct according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

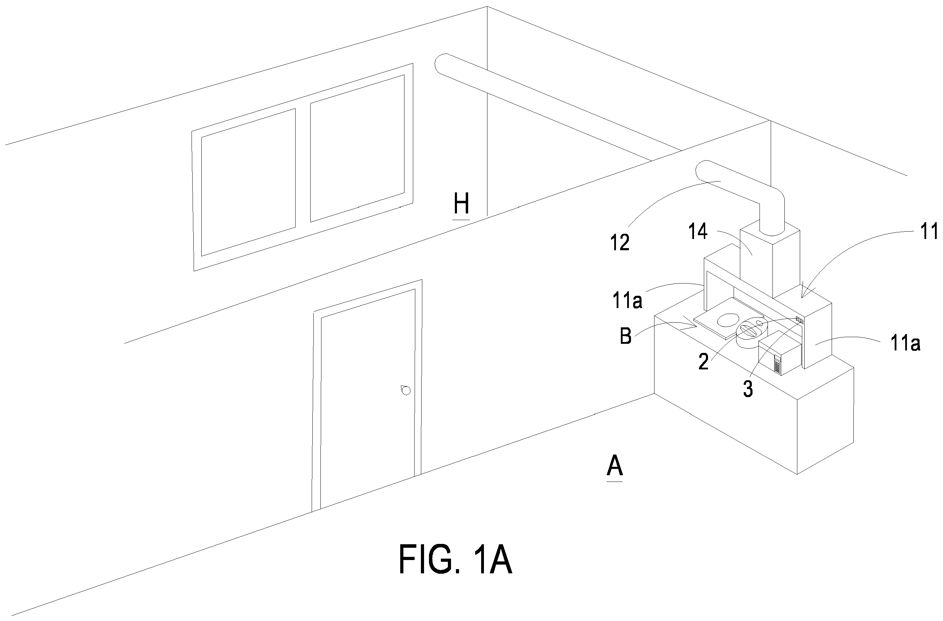

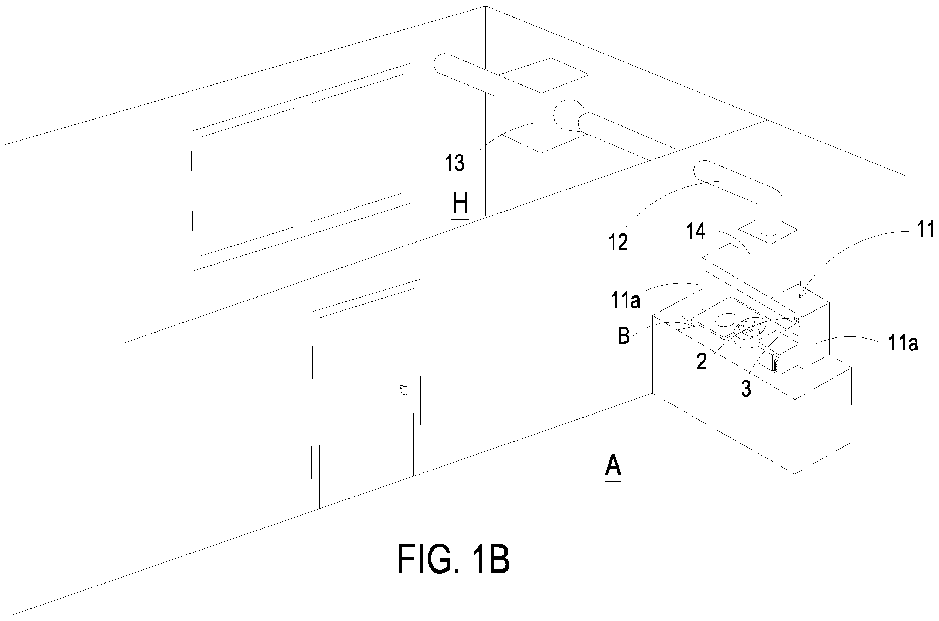

Please refer to FIG. 1A and FIG. 1B. The present disclosure provides a range hood used in an indoor air pollution prevention system C. The range hood comprises a guiding cover 11, a guiding duct 12, an air guiding fan 13, an electrostatic oil fume separator 14, and a networked controller. The guiding cover 11 is arranged in one side of a cooking equipment B of a kitchen space A. There are two deflectors 11a extended from two sides of the guiding cover 11 for blocking air pollution surrounding the cooking equipment B from spreading, and the air pollution is concentrated to an air guiding path, so as to purify the air pollution to a level close to zero. The guiding duct 12 is in communication with the air guiding path, wherein one end of the guiding duct 12 is in communication with a top of the guiding cover 11, and the other end is in communication with an outdoor field. The air guiding fan 13 is arranged to be in communication with the guiding duct 12 for guiding air pollution to discharge to the outdoor field. The electrostatic oil fume separator 14 is arranged above the guiding cover 11. Wherein, one end of the electrostatic oil fume separator 14 is in communication with the guiding duct 12 to separate oil smoke. The passing air pollution is separated into oil droplets to be collected, and a separated smoke gas is guided to the guiding duct 12, and discharged to the outdoor field by the air guiding fan 13. The networked controller comprises an intelligent switch 2 and a gas detection module 3. The networked controller receives a control command of the indoor air pollution prevention system C through an networked communication, so as to control an activation operation of the air guiding fan 13, and the air pollution of the kitchen space A is detected in real time and purified to a level close to zero by the range hood.

Notably, in the above embodiment, the air guiding fan 13 includes an exhaust volume greater than 20 m³/min, and a wind pressure greater than 30 mmAq. In some embodiments, the air guiding fan 13 is configured to be in communication with the guiding duct 12. As shown in FIG. 1A, the air guiding fan 13 is integrally formed on the guiding cover 11 and is in communication with the guiding duct 12. In other embodiments, as shown in FIG. 1B, the air guiding fan 13 is arranged on the guiding duct 12, and forms an isolation space H from the guiding cover 11, so that a noise generated from the activation operation of the air guiding fan 13 is far away from the kitchen space A. Consequently, the noise is effectively reduced to achieve a quiet effect, allowing the cooks to stay comfortable in the kitchen space A. Notably, the cooking equipment B includes cooking stoves, electric cookers, microwave ovens, or air fryers, etc., but not limited to.

In the above embodiment, the networked controller comprises an intelligent switch 2 and a gas detection module 3. The intelligent switch 2 is electrically connected to the gas detection module 3. The intelligent switch 2 is configured to receive the control command of the indoor air pollution prevention system C through the networked communication, so as to control an open operation or a close operation of the air guiding fan 13. The gas detection module 3 is configured to detect the air pollution and output a gas detection data as a monitoring state, and conduct two-way communication with the indoor air pollution prevention system C through the networked communication. The indoor air pollution prevention system C receives the gas detection data, intelligently compares and sends a driving command. Then, the gas detection module 3 receives the driving command and transmits to the intelligent switch 2, so as to control the open operation or the close operation of the air guiding fan 13, and adjust the exhaust volume of the air guiding fan 13.

Notably, the air pollution is one selected from the group consisting of particulate matter, carbon monoxide, carbon dioxide, ozone, sulfur dioxide, nitrogen dioxide, lead, total volatile organic compounds, formaldehyde, bacteria, fungi, virus, and a combination thereof. In the above embodiment, the monitoring state is to evaluate and monitor whether the gas detection data of the air pollution exceeds a safe detection value. The safe detection value includes at least one selected from the group consisting of a concentration of particulate matter 2.5 (PM2.5) which is less than 15 µg/m³, a concentration of carbon dioxide (CO₂) which is less than 1000 ppm, a concentration of total volatile organic compounds (TVOC) which is less than 0.56 ppm, a concentration of formaldehyde (HCHO) which is less than 0.08 ppm, a colony-forming unit of bacteria which is less than 1500 CFU/m³, a colony-forming unit of fungi which is less than 1000 CFU/m³, a concentration of sulfur dioxide which is less than 0.075 ppm, a concentration of nitrogen dioxide which is less than 0.1 ppm, a concentration of carbon monoxide which is less than 9 ppm, a concentration of ozone which is less than 0.06 ppm, and a concentration of lead which is less than 0.15 µg/m³. In this embodiment, the above-mentioned intelligent comparison procedure is as follows: when the gas detection module 3 of the networked controller detects the gas detection data, the indoor air pollution prevention system C receives the gas detection data and connects to a cloud device to perform intelligent calculation comparison, and then intelligently selects to send the driving command. Then, the gas detection module 3 of the networked controller receives the driving command, intelligently determines the driving command, and transmits it to the intelligent switch 2, so as to control the open operation or the close operation of the air guiding fan 13 or adjust the exhaust volume of the air guiding fan 13. In some embodiments, if the gas detection data is greater than the safe detection value, the exhaust volume of the air guiding fan 13 is increased. In other embodiments, when the gas detection data is close to the safe detection value, the exhaust volume of the air guiding fan 13 is reduced.

From the above descriptions, the present disclosure provides a range hood connecting the indoor air pollution prevention system C to detect the air pollution of the kitchen space A and purify to a level close to zero. By the arrangement of the networked controller connecting the indoor air pollution prevention system C, it is implemented to monitor the air quality in the kitchen space A anytime and anywhere. In the mean time, the range hood controls the activation of air guiding fan 13 in real time, so as to guide the passing air pollution to be separated into oil droplets and smoke gas by the electrostatic oil fume separator 14, wherein the separated smoke gas is discharged to the outdoor field through the guiding duct 12. Moreover, the range hood also detects the air pollution level in the kitchen space A and intelligently compares it with the air quality of the surrounding environment, and instantly control the air guide fan 13 to adjust the exhaust volume according to the air pollution level. In addition, the guiding cover 11 is arranged in one side of a cooking equipment B of the kitchen space A. The guide cover 11 is not only small in size and does not occupy the kitchen space A, but also shortens the distance for absorbing oil droplets and smoke gas. In the embodiment, the two deflectors 11a arranged in the two side of the guide cover 11, the air pollution surrounding the cooking equipment B can be blocked without spreading, and concentrated to the air guiding path, so as to purify the air pollution to a level close to zero. In some embodiments, the air guiding fan 13 is arranged on the guiding duct 12, and forms an isolation space H from the guiding cover 11, so that a noise generated from the activation operation of the air guiding fan 13 is far away from the kitchen space A. Consequently, the noise is effectively reduced to achieve a quiet effect, allowing the cooks to stay comfortable in the kitchen space A. Consequently, by the configuration of the air guiding fan 13 isolated from the cooking equipment B of the kitchen space A, the effect of keeping away from oil pollution is achieved, thereby reducing the frequency and difficulty of cleaning.

After understanding the arrangement of the range hood of the present disclosure, which can realize the real-time detection and purify the air pollution in the kitchen space to a level close to zero, the internal structure and function of the gas detection module 3 will be described in detail below.

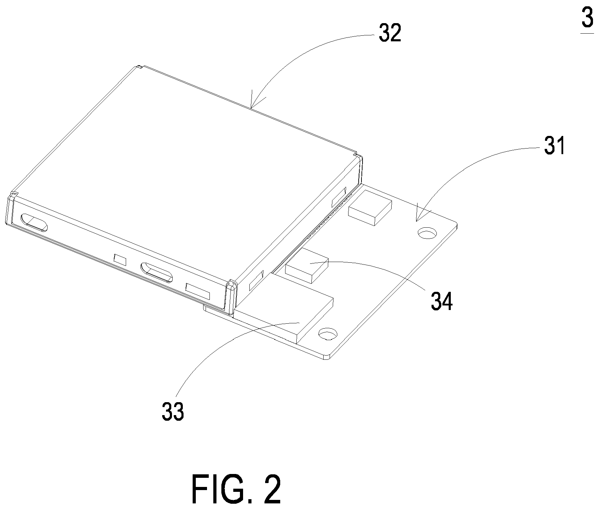

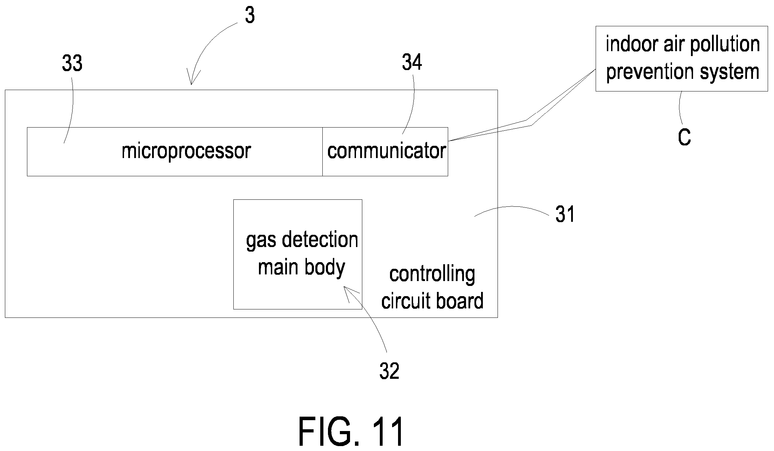

As shown in FIG. 2 and FIG. 11. The gas detection module 3 mentioned above includes a controlling circuit board 31, a gas detection main body 32, a microprocessor 33 and a communicator 34. The gas detection main body 32, the microprocessor 33 and the communicator 34 are integrally packaged on and electrically connected to the controlling circuit board 31. The microprocessor 33 controls the operation of the gas detection main body 32. The gas detection main body 32 detects the air pollution and outputs a detection signal. The microprocessor 33 receives, calculates and processes the detection signal for generating and outputting the gas detection data to the communicator 34 for externally transmitting to the indoor air pollution prevention system C.

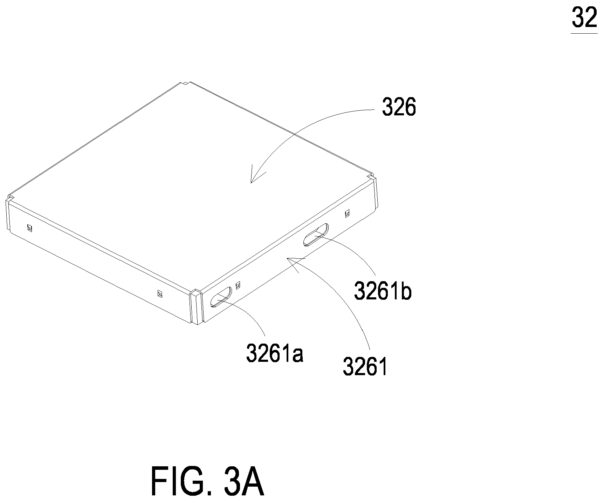

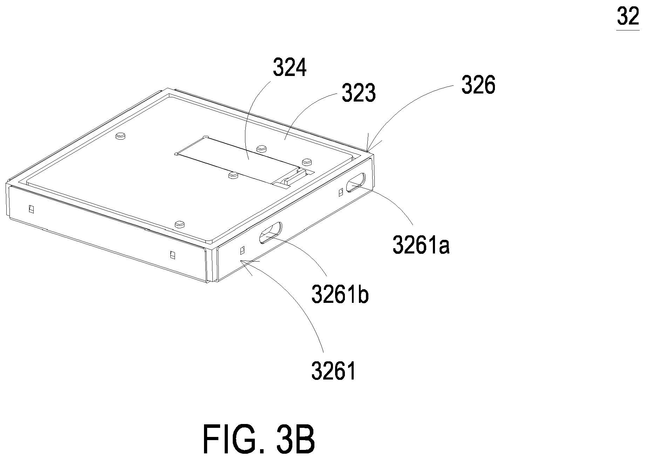

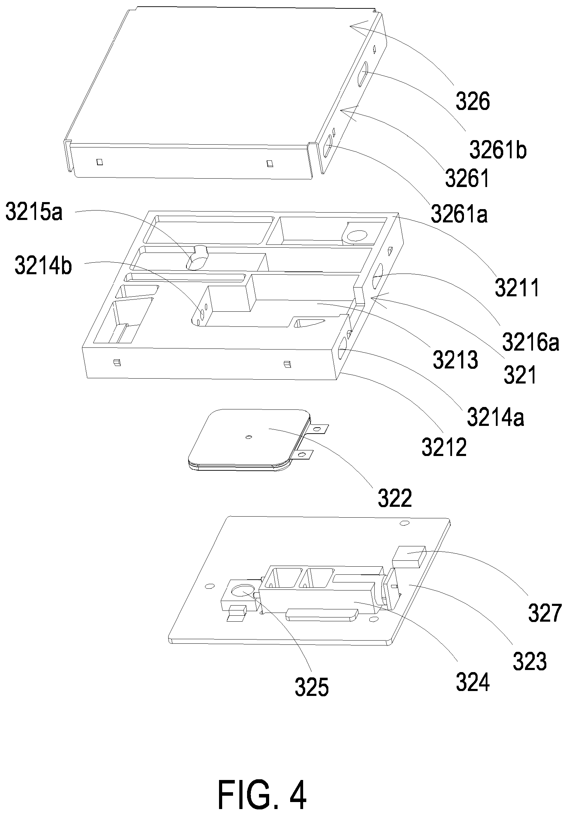

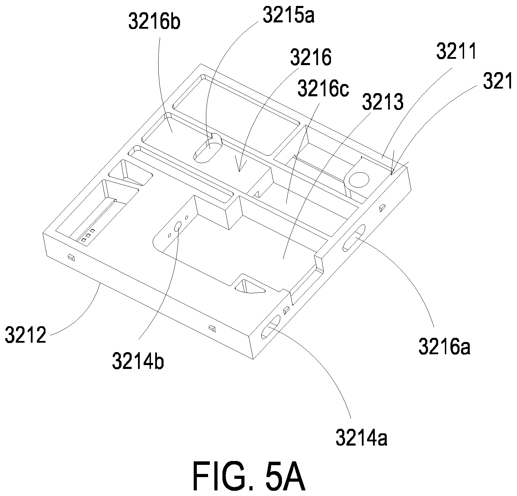

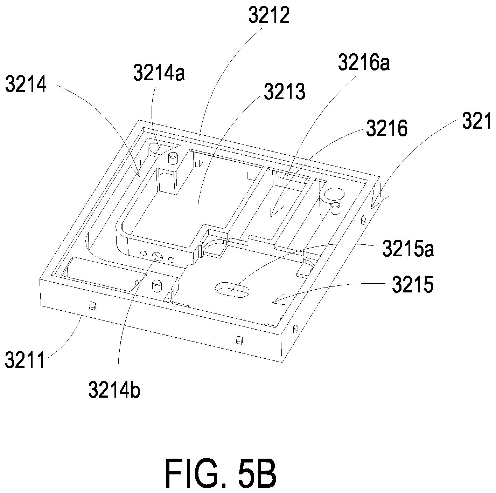

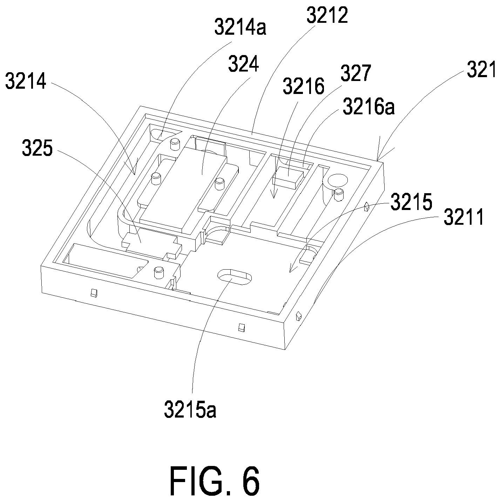

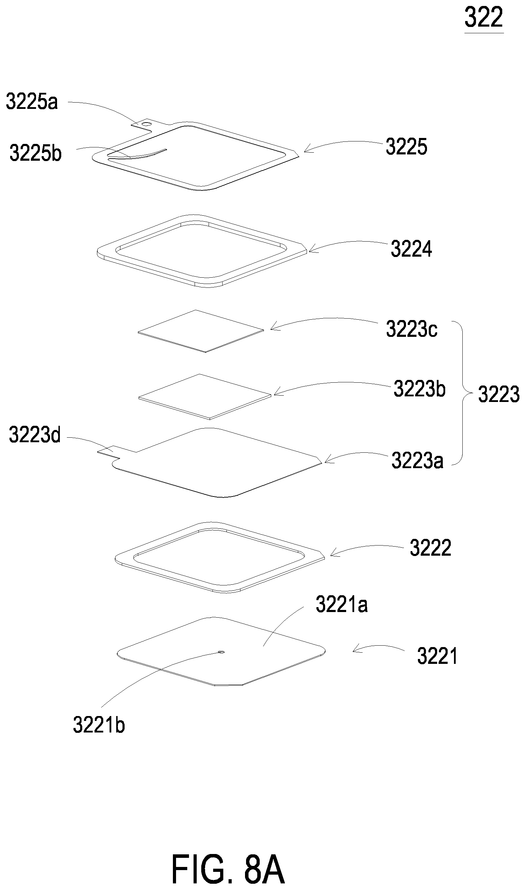

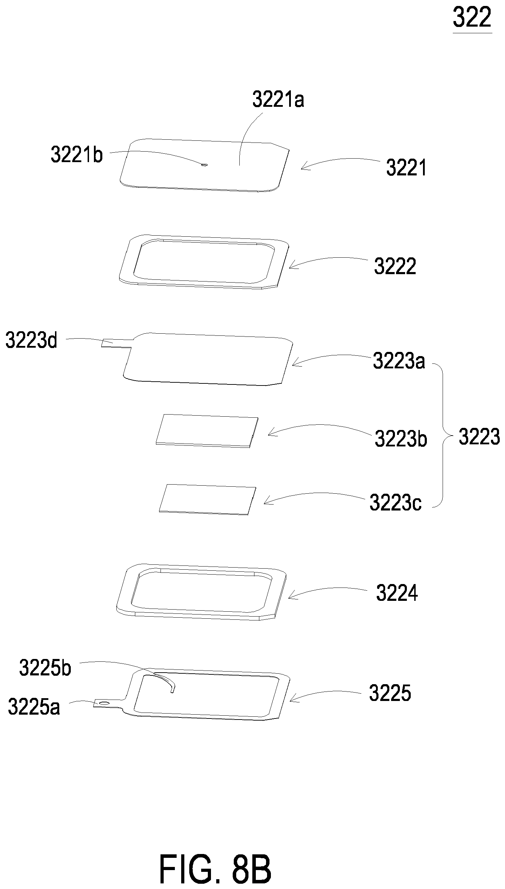

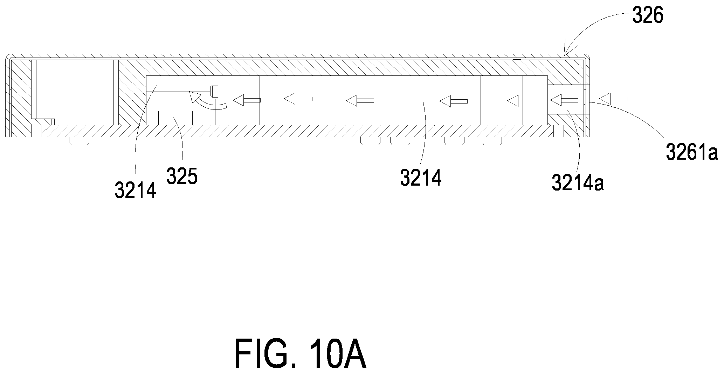

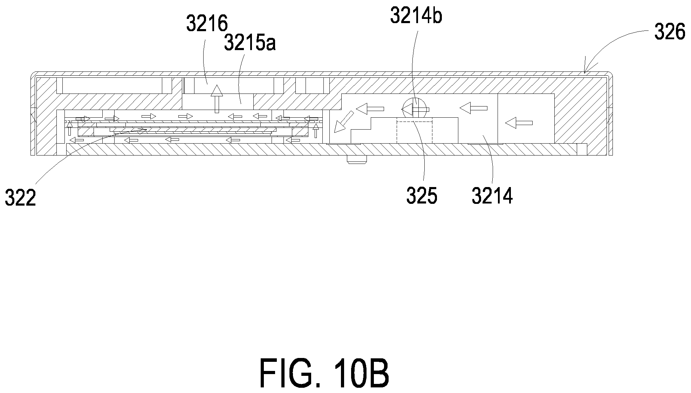

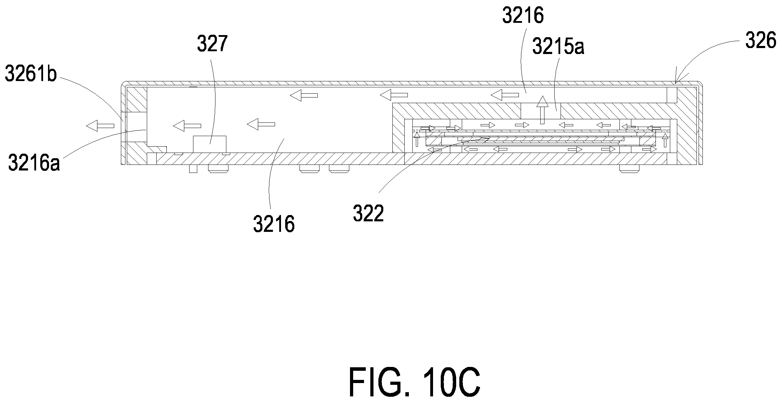

Please refer to FIG. 3A, FIG. 3B, and FIG. 4A to FIG. 10C. The gas detection main body 32 includes a base 321, a piezoelectric actuator 322, a driving circuit board 323, a laser component 324, a particulate sensor 325 and an outer cover 326. The base 321 includes a first surface 3211, a second surface 3212, a laser loading region 3213, a gas-inlet groove 3214, a gas-guiding-component loading region 3215 and a gas-outlet groove 3216. In the embodiment, the first surface 3211 and the second surface 3212 are two surfaces opposite to each other. The laser component 324 is hollowed out from the first surface 3211 to the second surface 3212. The outer cover 326 covers the base 321 and includes a lateral plate 3261. The lateral plate 3261 includes an inlet opening 3261a and an outlet opening 3261b. The gas-inlet groove 3214 is concavely formed from the second surface 3212 and disposed adjacent to the laser loading region 3213. The gas-inlet groove 3214 includes a gas-inlet 3214a in communication with an environment outside the base 321, and is spatially corresponding in position to the inlet opening 3261a of the outer cover 326. Two transparent windows 3214b are respectively opened on two lateral walls of the gas-inlet groove 3214 and are in communication with the laser loading region 3213. Therefore, as the first surface 3211 of the base 321 is covered and attached by the outer cover 326 and the second surface 3212 is covered and attached by the driving circuit board 323, an inlet path is defined by the gas-inlet groove 3214.

In the embodiment, the gas-guiding-component loading region 3215 is concavely formed from the second surface 3212 and in communication with the gas-inlet groove 3214. A ventilation hole 3215a penetrates a bottom surface of the gas-guiding-component loading region 3215, and four positioning protrusions 3215b are disposed at four corners of the gas-guiding-component loading region 3215, respectively. The gas-outlet groove 3216 mentioned above includes a gas-outlet 3216a, and the gas-outlet 3216a is spatially corresponding to the outlet opening 3261b of the outer cover 326. The gas-outlet groove 3216 includes a first section 3216b and a second section 3216c. The first section 3216b is concavely formed from a region of the first surface 3211 spatially corresponding to a vertical projection area of the gas-guiding-component loading region 3215. The second section 3216c is hollowed out from the first surface 3211 to the second surface 3212 in a region where the first surface 3211 is misaligned with the vertical projection area of the gas-guiding-component loading region 3215 and extended therefrom. The first section 3216b and the second section 3216c are connected to form a stepped structure. Moreover, the first section 3216b of the gas-outlet groove 3216 is in communication with the ventilation hole 3215a of the gas-guiding-component loading region 3215, and the second section 3216c of the gas-outlet groove 3216 is in communication with the gas-outlet 3216a. In that, when the first surface 3211 of the base 321 is attached and covered by the outer cover 326 and the second surface 3212 of the base 321 is attached and covered by the driving circuit board 323, the gas-outlet groove 3216 and the driving circuit board 323 collaboratively define an outlet path.

The laser component 324 and the particulate sensor 325 mentioned above are disposed on the driving circuit board 323 and located within the base 321. In order to clearly describe and illustrate the positions of the laser component 324 and the particulate sensor 325 in the base 321, the driving circuit board 323 is specifically omitted. The laser component 324 is accommodated in the laser loading region 3213 of the base 321, and the particulate sensor 325 is accommodated in the gas-inlet groove 3214 of the base 321 and is aligned to the laser component 324. In addition, the laser component 324 is spatially corresponding to the transparent window 3214b, thereby a light beam emitted by the laser component 324 passes through the transparent window 3214b and irradiates into the gas-inlet groove 3214. Furthermore, the light beam path extends from the laser component 324 and passes through the transparent window 3214b in an orthogonal direction perpendicular to the gas-inlet groove 3214. In the embodiment, a projecting light beam emitted from the laser component 324 passes through the transparent window 3214b and enters the gas-inlet groove 3214 to irradiate the gas in the gas-inlet groove 3214. When the suspended particles contained in the gas are irradiated and generate scattered light spots, the scattered light spots are detected and calculated by the particulate sensor 325, which is in an orthogonal direction perpendicular to the gas-inlet groove 3214, for obtaining the detection data of the gas. Moreover, a gas sensor 327 is positioned and disposed on the driving circuit board 323, electrically connected to the driving circuit board 323, and accommodated in the gas-outlet groove 3216, for detecting the air pollution introduced into the gas-outlet groove 3216. Preferably but not exclusively, the gas sensor 327 is a volatile-organic-compound sensor for detecting information of carbon dioxide or total volatile organic compounds, or a formaldehyde sensor for detecting information of formaldehydes, or a bacteria sensor for detecting information of bacteria or fungi, or a virus senor for detecting information of viruses.

The piezoelectric actuator 322 mentioned above is accommodated in the square-shaped gas-guiding-component loading region 3215 of the base 321. In addition, the gas-guiding-component loading region 3215 is in communication with the gas-inlet groove 3214. When the piezoelectric actuator 322 is enabled, the gas in the gas-inlet groove 3214 is inhaled by the piezoelectric actuator 322, so that the gas flows into the piezoelectric actuator 322 and is transported into the gas-outlet groove 3216 through the ventilation hole 3215a of the gas-guiding-component loading region 3215. The driving circuit board 323 mentioned above covers and attaches to the second surface 3212 of the base 321, and the laser component 324 is positioned and disposed on the driving circuit board 323, and is electrically connected to the driving circuit board 323. The particulate sensor 325 also is positioned and disposed on the driving circuit board 323, and is electrically connected to the driving circuit board 323. When the outer cover 326 covers the base 321, the inlet opening 3261a is spatially corresponding to the gas-inlet 3214a of the base 321, and the outlet opening 3261b is spatially corresponding to the gas-outlet 3216a of the base 321.

The piezoelectric actuator 322 mentioned above includes a gas-injection plate 3221, a chamber frame 3222, an actuator element 3223, an insulation frame 3224 and a conductive frame 3225. In the embodiment, the gas-injection plate 3221 is made by a flexible material and includes a suspension plate 3221a and a hollow aperture 3221b. The suspension plate 3221a is a sheet structure and is permitted to undergo a bending deformation. Preferably but not exclusively, the shape and the size of the suspension plate 3221a are corresponding to the inner edge of the gas-guiding-component loading region 3215, but not limited thereto. The hollow aperture 3221b penetrates a center of the suspension plate 3221a, so as to allow the gas to flow therethrough. Preferably but not exclusively, the shape of the suspension plate 3221a is selected from the group consisting of a square, a circle, an ellipse, a triangle and a polygon.

The chamber frame 3222 mentioned above is carried and stacked on the gas-injection plate 3221. In addition, the shape of the chamber frame 3222 is corresponding to the gas-injection plate 3221. The actuator element 3223 is carried and stacked on the chamber frame 3222 and collaboratively defines a resonance chamber 3226 with the chamber frame 3222 and the suspension plate 3221a. The insulation frame 3224 is carried and stacked on the actuator element 3223 and the appearance of the insulation frame 3224 is similar to that of the chamber frame 3222. The conductive frame 3225 is carried and stacked on the insulation frame 3224, and the appearance of the conductive frame 3225 is similar to that of the insulation frame 3224. In addition, the conductive frame 3225 includes a conducting pin 3225a extended outwardly from an outer edge of the conducting pin 3225a and a conducting electrode 3225b extended inwardly from an inner edge of the conductive frame 3225. Moreover, the actuator element 3223 further includes a piezoelectric carrying plate 3223a, an adjusting resonance plate 3223b and a piezoelectric plate 3223c. The piezoelectric carrying plate 3223a is carried and stacked on the chamber frame 3222. The adjusting resonance plate 3223b is carried and stacked on the piezoelectric carrying plate 3223a. The piezoelectric plate 3223c is carried and stacked on the adjusting resonance plate 3223b. The adjusting resonance plate 3223b and the piezoelectric plate 3223c are accommodated in the insulation frame 3224. The conducting electrode 3225b of the conductive frame 3225 is electrically connected to the piezoelectric plate 3223c. In the embodiment, the piezoelectric carrying plate 3223a and the adjusting resonance plate 3223b are made by a conductive material. The piezoelectric carrying plate 3223a includes a piezoelectric pin 3223d. The piezoelectric pin 3223d and the conducting pin 3225a are electrically connected to a driving circuit (not shown) on the driving circuit board 323, so as to receive a driving signal (which can be a driving frequency and a driving voltage). Through this structure, a circuit is formed by the piezoelectric pin 3223d, the piezoelectric carrying plate 3223a, the adjusting resonance plate 3223b, the piezoelectric plate 3223c, the conducting electrode 3225b, the conductive frame 3225 and the conducting pin 3225a for transmitting the driving signal. Moreover, the insulation frame 3224 provides insulation between the conductive frame 3225 and the actuator element 3223, so as to avoid the occurrence of a short circuit. Accordingly, the driving signal is transmitted to the piezoelectric plate 3223c. After receiving the driving signal, the piezoelectric plate 3223c deforms due to the piezoelectric effect, and the piezoelectric carrying plate 3223a and the adjusting resonance plate 3223b are further driven to bend and vibrate in the reciprocating manner.

More specifically, the adjusting resonance plate 3223b is located between the piezoelectric plate 3223c and the piezoelectric carrying plate 3223a and served as a cushion therebetween, so that the vibration frequency of the piezoelectric carrying plate 3223a is adjustable. Basically, the thickness of the adjusting resonance plate 3223b is greater than the thickness of the piezoelectric carrying plate 3223a, and the thickness of the adjusting resonance plate 3223b is adjustable to adjust the vibration frequency of the actuator element 3223 accordingly.

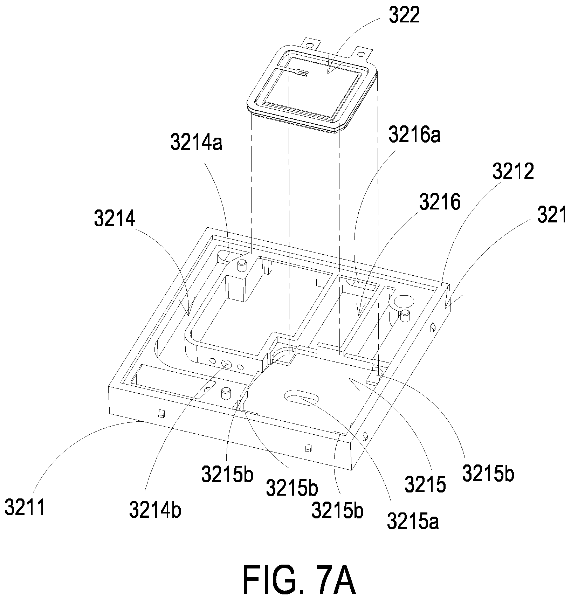

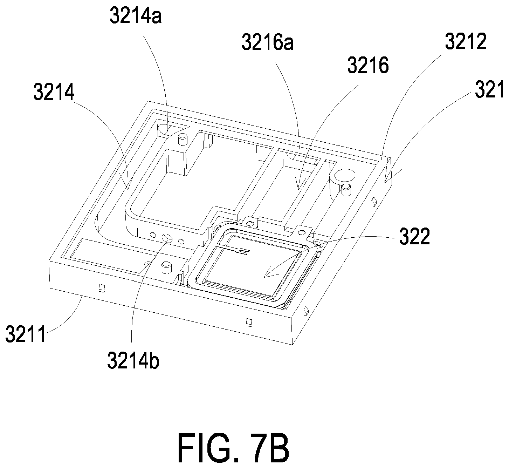

Please refer to FIG. 7A, FIG. 7B, FIG. 8A, FIG. 8B and FIG. 9A. The gas-injection plate 3221, the chamber frame 3222, the actuator element 3223, the insulation frame 3224 and the conductive frame 3225 are stacked and positioned in the gas-guiding-component loading region 3215 sequentially, so that the piezoelectric actuator 322 is supported and positioned in the gas-guiding-component loading region 3215. A clearance 3221c is defined by the piezoelectric actuator 322 between the suspension plate 3221a and an inner edge of the gas-guiding-component loading region 3215 for gas flowing therethrough. A flowing chamber 3227 is formed between the gas-injection plate 3221 and the bottom surface of the gas-guiding-component loading region 3215. The flowing chamber 3227 is in communication with the resonance chamber 3226 located between the actuator element 3223, the chamber frame 3222 and the suspension plate 3221a through the hollow aperture 3221b of the gas-injection plate 3221. By controlling the vibration frequency of the gas in the resonance chamber 3226 to be close to the vibration frequency of the suspension plate 3221a, the Helmholtz resonance effect is generated between the resonance chamber 3226 and the suspension plate 3221a, so as to improve the efficiency of gas transportation. When the piezoelectric plate 3223c moves away from the bottom surface of the gas-guiding-component loading region 3215, the suspension plate 3221a of the gas-injection plate 3221 is driven by the piezoelectric plate 3223c to move away from the bottom surface of the gas-guiding-component loading region 3215. In that, the volume of the flowing chamber 3227 is expanded rapidly, the internal pressure of the flowing chamber 3227 is decreased and generates a negative pressure, and the gas outside the piezoelectric actuator 322 is inhaled through the clearance 3221c and enters the resonance chamber 3226 through the hollow aperture 3221b. Consequently, the pressure in the resonance chamber 3226 is increased to generate a pressure gradient. When the suspension plate 3221a of the gas-injection plate 3221 is driven by the piezoelectric plate 3223c to move toward the bottom surface of the gas-guiding-component loading region 3215, the gas in the resonance chamber 3226 is discharged out rapidly through the hollow aperture 3221b, and the gas in the flowing chamber 3227 is compressed, so that the converged gas is quickly and massively ejected out of the flowing chamber 3227 under the condition close to an ideal gas state of the Bernoulli's law, and transported to the ventilation hole 3215a of the gas-guiding-component loading region 3215.

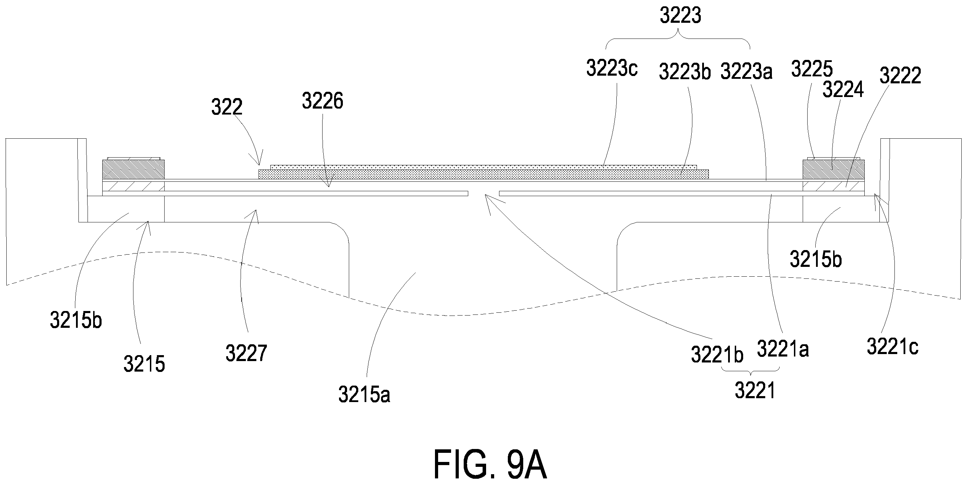

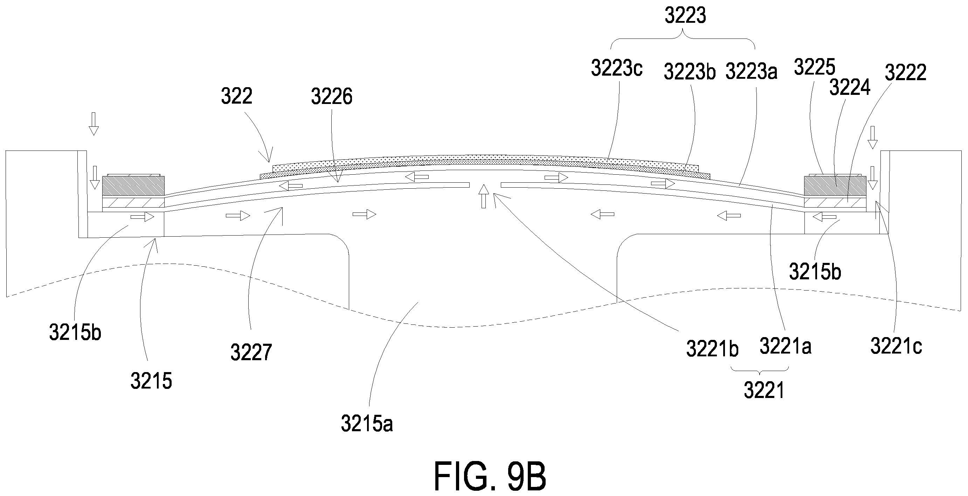

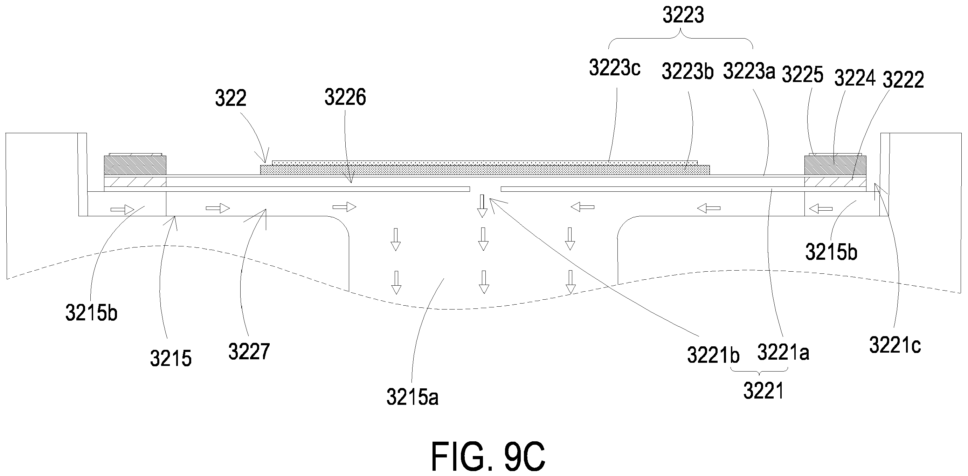

By repeating the operation steps shown in FIG. 9B and FIG. 9C, the piezoelectric plate 3223c is driven to vibrate in a reciprocating manner. According to the principle of inertia, since the gas pressure inside the resonance chamber 3226 is lower than the equilibrium gas pressure after the converged gas is ejected out, the gas is introduced into the resonance chamber 3226 again. Moreover, the vibration frequency of the gas in the resonance chamber 3226 is controlled to be close to the vibration frequency of the piezoelectric plate 3223c, so as to generate the Helmholtz resonance effect to achieve the gas transportation at high speed and in large quantities. The gas is inhaled through the inlet opening 3261a of the outer cover 326, flows into the gas-inlet groove 3214 of the base 321 through the gas-inlet 3214a, and is transported to the position of the particulate sensor 325. Furthermore, the piezoelectric actuator 322 is enabled continuously to inhale the gas into the inlet path so as to facilitate the external gas to be introduced rapidly, flowed stably, and be transported above the particulate sensor 325. At this time, a projecting light beam emitted from the laser component 324 passes through the transparent window 3214b and enters into the gas-inlet groove 3214 to irritate the suspended particles contained in the gas flowing above the particulate sensor 325 in the gas-inlet groove 3214. When the suspended particles contained in the gas are irradiated and generate scattered light spots, the scattered light spots are received and calculated by the particulate sensor 325 for obtaining related information about the sizes and the concentrations of the suspended particles contained in the gas. Moreover, the gas above the particulate sensor 325 is continuously driven and transported by the piezoelectric actuator 322, flows into the ventilation hole 3215a of the gas-guiding-component loading region 3215, and is transported to the gas-outlet groove 3216. Finally, after the gas flows into the gas-outlet groove 3216, the gas is continuously transported into the gas-outlet groove 3216 by the piezoelectric actuator 322, and the gas in the gas-outlet groove 3216 is pushed and discharged out through the gas-outlet 3216a and the outlet opening 3261b.

The gas detection module 3 of the present disclosure not only includes the particulate sensor 325 for detecting information of particulate matter (such as PM1, PM2.5, PM10), but also detects the properties of the introduced gas, for example, for identifying the gas as formaldehyde, ammonia, carbon monoxide, carbon dioxide, oxygen or ozone. Therefore, the gas detection device 3 of the present disclosure further includes the gas sensor 327. The gas sensor 327 is positioned and disposed on the driving circuit board 323, electrically connected to the driving circuit board 323, and accommodated in the gas-outlet groove 3216, so as to detect the gases contained in the gas exhausted out through the outlet path. In an embodiment, the gas sensor 327 includes a volatile-organic-compound sensor for detecting the gas information of carbon dioxide or volatile organic compounds. In another embodiment, the gas sensor 327 includes a formaldehyde sensor for detecting the gas information of formaldehyde. In another embodiment, the gas sensor 327 includes a bacteria sensor for detecting the information of bacteria or fungi. In another embodiment, the gas sensor 327 includes a virus sensor for detecting the information of virus.

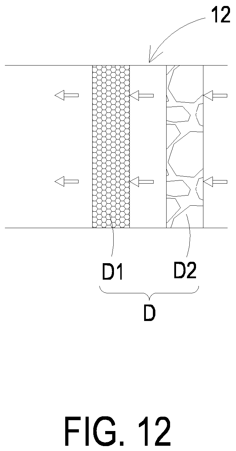

Notably, in the embodiment, the range hood is provided for connecting the indoor air pollution prevention system C to detect the air pollution of the kitchen space A and purify to a level close to zero. As shown in FIG. 12, in some embodiments, a filter element D is disposed in the guiding duct 13, but not limited thereto. In the embodiment, the filter element D is a filter screen which cleans the air pollution through physically blocking and absorbing, but not limited thereto. Preferably but not exclusively, the filter screen is a high efficiency particulate air (HEPA) filter screen D1, which is configured to absorb the chemical smokes, bacteria, dust particles and pollens contained in the air pollution, so that the air pollution introduced into the filter element D is filtered and purified to achieve the effect of filtering and purification. Preferably but not exclusively, the filter screen is an activated carbon filter screen D2, which is configured to remove the organic and inorganic substances in the air pollution and remove the colored and odorous substances.

In summary, the present disclosure provides a range hood connecting the indoor air pollution prevention system to detect the air pollution of the kitchen space and purify to a level close to zero. By the arrangement of the networked controller connecting the indoor air pollution prevention system, it is implemented to monitor the air quality in the kitchen space anytime and anywhere. In the mean time, the range hood controls the activation of air guiding fan in real time, so as to guide the passing air pollution to be separated into oil droplets and smoke gas by the electrostatic oil fume separator, wherein the separated smoke gas is discharged to the outdoor field through the guiding duct. Moreover, the range hood also detects the air pollution level in the kitchen space and intelligently compares it with the air quality of the surrounding environment, and instantly control the air guide fan to adjust the exhaust volume according to the air pollution level. In addition, the guiding cover is arranged in one side of a cooking equipment of the kitchen space. The guide cover is not only small in size and does not occupy the kitchen space, but also shortens the distance for absorbing oil droplets and smoke gas. There are two deflectors arranged in the two side of the guide cover, the air pollution surrounding the cooking equipment can be blocked without spreading, and concentrated to the air guiding path, so as to purify the air pollution to a level close to zero. Furthermore, the air guiding fan is arranged on the guiding duct, and forms an isolation space from the guiding cover, so that a noise generated from the activation operation of the air guiding fan is far away from the kitchen space. Consequently, the noise is effectively reduced to achieve a quiet effect, allowing the cooks to stay comfortable in the kitchen space. Consequently, by the configuration of the air guiding fan isolated from the cooking equipment of the kitchen space, the effect of keeping away from oil pollution is achieved, thereby reducing the frequency and difficulty of cleaning. The present disclosure includes the industrial applicability and the inventive steps.

## Claims

1. A range hood, **characterized by** comprising:
a guiding cover (11), arranged in one side of a cooking equipment (B) of a kitchen space (A), wherein two deflectors (11a) are extended from two sides of the guiding cover (11) for blocking air pollution surrounding the cooking equipment (B) from spreading, wherein the air pollution is concentrated to an air guiding path, so as to purify the air pollution to a level close to zero;
a guiding duct (12), arranged to be in communication with the air guiding path, wherein one end is in communication with a top of the guiding cover (11), and the other end is in communication with an outdoor field;
an air guiding fan (13), arranged to be in communication with the guiding duct (12) for guiding air pollution to discharge to the outdoor field;
an electrostatic oil fume separator (14), arranged above the guiding cover (11), wherein one end is in communication with the guiding duct (12) to separate oil smoke, the passing air pollution is separated into oil droplets to be collected, and a separated smoke gas is guided to the guiding duct (12), and discharged to the outdoor field by the air guiding fan (13); and
a networked controller receiving a control command of an indoor air pollution prevention system (C) through an networked communication, so as to control an activation operation of the air guiding fan (13), wherein the air pollution of the kitchen space (A) is detected in real time and purified to a level close to zero by the range hood.

2. The range hood according to claim 1, wherein the air guiding fan (13) includes an exhaust volume greater than 20 m³/min, and a wind pressure greater than 30 mmAq.

3. The range hood according to claim 1, wherein the air guiding fan (13) is arranged above the guiding duct (12), and forms an isolation space (H) from the guiding cover (11), so that a noise of the air guiding fan (13) is far away from the kitchen space (A), and the noise is effectively reduced.

4. The range hood according to claim 1, wherein the networked controller further comprises an intelligent switch (2) and a gas detection module (3), wherein the intelligent switch (2) is electrically connected to the gas detection module (3), and the intelligent switch (2) is configured to receive the control command of the indoor air pollution prevention system (C) through the networked communication, so as to control an open operation or a close operation of the air guiding fan (13), the gas detection module (3) is configured to detect the air pollution and output a gas detection data as a monitoring state, and conduct two-way communication with the indoor air pollution prevention system (C) through the networked communication, wherein the indoor air pollution prevention system (C) receives the gas detection data, intelligently compares and sends a driving command, the gas detection module (3) receives the driving command and transmits to the intelligent switch (2), so as to control the open operation or the close operation of the air guiding fan (13), and adjust the exhaust volume of the air guiding fan (13).

5. The range hood according to claim 4, wherein the gas detection module (3) comprises a controlling circuit board (31), a gas detection main body (32), a microprocessor (33) and a communicator (34), the gas detection main body (32), the microprocessor (33) and the communicator (34) are integrally packaged on and electrically connected to the controlling circuit board (31), the microprocessor (33) controls an operation of the gas detection main body (32), the gas detection main body (32) detects the air pollution and outputs a detection signal, and the microprocessor (33) receives, calculates and processes the detection signal for generating and outputting the gas detection data to the communicator (34) for externally transmitting to the indoor air pollution prevention system (C).

6. The range hood according to claim 5, wherein the gas detection main body (32) comprises:
a base (321) comprising:
a first surface (3211);
a second surface (3212) opposite to the first surface (3211);
a laser loading region (3213) hollowed out from the first surface (3211) to the second surface (3212);
a gas-inlet groove (3214) concavely formed from the second surface (3212) and disposed adjacent to the laser loading region (3213), wherein the gas-inlet groove (3214) comprises a gas-inlet (3214a) and two lateral walls, and a transparent window (3214b) is respectively opened on the two lateral walls for being in communication with the laser loading region (3213);
a gas-guiding-component loading region (3215) concavely formed from the second surface (3212) and in communication with the gas-inlet groove (3214), and having a ventilation hole (3215a) penetrated a bottom surface thereof; and
a gas-outlet groove (3216) concavely formed from a region of the first surface (3211) spatially corresponding to the bottom surface of the gas-guiding-component loading region (3215) and hollowed out from the first surface (3211) to the second surface (3212) in a region where the first surface (3211) is misaligned with the gas-guiding-component loading region (3215), wherein the gas-outlet groove (3216) is in communication with the ventilation hole (3215a) and comprises a gas-outlet (3216a) mounted thereon;
a piezoelectric actuator (322) accommodated in the gas-guiding-component loading region (3215);
a driving circuit board (323) covering and attaching to the second surface (3212) of the base (321);
a laser component (324) positioned and disposed on the driving circuit board (323) and electrically connected to the driving circuit board (323), and accommodated in the laser loading region (3213), wherein a light beam path emitted by the laser component (324) passes through the transparent window (3214b) and extends in an orthogonal direction perpendicular to the gas-inlet groove (3214);
a particulate sensor (325) positioned and disposed on the driving circuit board and electrically connected to the driving circuit board (323), and accommodated in the gas-inlet groove (3214) at a region in an orthogonal direction perpendicular to the light beam path emitted by the laser component (324) for detecting suspended particles contained in the air pollution passing through the gas-inlet groove (3214) and irradiated by a light beam emitted from the laser component (324);
a gas sensor (327) positioned and disposed on the driving circuit board (323) and electrically connected to the driving circuit board (323), and accommodated in the gas-outlet groove (3216), so as to detect the air pollution introduced into the gas-outlet groove (3216); and
an outer cover (326) covering the base (321) and comprising a lateral plate (3261), wherein the lateral plate (3261) comprises an inlet opening (3261a) and an outlet opening (3261b), the inlet opening (3261a) is spatially corresponding to the gas-inlet (3214a) of the base (321) and the outlet opening (3261b) is spatially corresponding to the gas-outlet (3216a) of the base (321),
wherein the outer cover (326) covers the base (321), and the driving circuit board (323) covers the second surface (3211), so that an inlet path is defined by the gas-inlet groove (3214), and an outlet path is defined by the gas-outlet groove (3216), and wherein the air pollution outside the gas-inlet (3214a) of the base (321) is inhaled by the piezoelectric actuator (322) and transported into the inlet path defined by the gas-inlet groove (3214) through the inlet opening (3261a), and passes through the particulate sensor (325) for detecting a concentration of the suspended particles contained in the air pollution, and the air pollution is further transported to the outlet path defined by the gas-outlet groove (3216) through the ventilation hole (3215a), passes through the gas sensor (327) for detecting, and then is discharged through the outlet opening (3261b).

7. The range hood according to claim 1, further comprising a filter element (D) disposed in the guiding duct.

8. The range hood according to claim 7, wherein the filter element (D) is a high efficiency particulate air (HEPA) filter screen.

9. The range hood according to claim 7, wherein the filter element (D) is an activated carbon filter screen.
